# EUROPEAN PATENT APPLICATION

(11) **EP 3 796 570 A1**
(43) Date of publication of application: **24.03.2021**
(21) Application number: 18919103.4
(22) Date of filing: 18.05.2018
(51) Int. Cl.: H04B 7/08, H04B 7/06, H04W 16/28, H04W 88/02

(54) **USER TERMINAL AND WIRELESS COMMUNICATION METHOD**

(71) Applicant: NTT DoCoMo, Inc., Tokyo 100-6150 (JP)
(72) Inventor: MATSUMURA, Yuki, Tokyo 1006150 (JP); UCHINO, Tooru, Tokyo 1006150 (JP); NAGATA, Satoshi, Tokyo 1006150 (JP); LIU, Min, Beijing 100190 (CN); WANG, Jing, Beijing 100190 (CN)
(74) Representative: Hoffmann Eitle
(86) International application number: PCT/JP2018/019415
(87) International publication number: WO 2019/220649

(57) **Abstract**

According to one aspect of the present disclosure, there is provided a user terminal including: a control section that determines the number of at least one of first reference signals for beam failure detection and second reference signals for new candidate beam identification that can be simultaneously monitored cross a plurality of cells based on a specific capability of the user terminal; and a receiving section that simultaneously monitors at least one of the first reference signals and the second reference signals in one or more cells based on the number of at least one of the first reference signals and the second reference signals that can be simultaneously monitored cross the plurality of cells. According to one aspect of the present disclosure, a beam recovery procedure can be appropriately performed even when BFRs in a plurality of cells are supported.

## Description

### Technical Field

The present disclosure relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower delays and so on (see non-patent literature 1). In addition, the specifications of LTE-A (LTE Advanced, LTE Rel.10, 11, 12, and 13) have been drafted for the purpose of further increasing the capacity and sophistication of LTE (LTE Rel.8, 9) and so on.

Successor systems of LTE (also referred to as, for example, "FRA (Future Radio Access)," "5G (5th generation mobile communication system)," "5G+ (plus)," "NR (New Radio)," "NX (New radio access)," "FX (Future generation radio access)," "LTE Rel.14 or 15 or later versions") have also been under study.

In the existing LTE system (LTE Rel.8 to 14), monitoring of radio link quality (radio link monitoring (RLM)) is performed. When a radio link failure (RLF) is detected by the RLM, a re-establishment of RRC (Radio Resource Control) connection is demanded for a user equipment (UE).

### Citation List

### Non-Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), it is considered to perform a procedure to detect a beam failure and switch to another beam (which may also be referred to as "beam failure recovery (BFR) procedure," "BFR" and so on).

Incidentally, in NR, it is considered to support not only BFR in a primary cell (PCell) but also BFR in a secondary cell (SCell).

However, when BFR is supported in a plurality of SCells, the UE needs to measure a large number of beams for beam failure detection and new candidate beam identification. As a result, the power consumption of the UE may increase or communication throughput may decrease.

Therefore, one of the objects of the present disclosure is to provide a user terminal and a radio communication method that can appropriately perform a beam recovery procedure even when BFRs in a plurality of cells are supported.

### Solution to Problem

According to one aspect of the present disclosure, there is provided a user terminal including: a control section that determines the number of at least one of first reference signals for beam failure detection and second reference signals for new candidate beam identification that can be simultaneously monitored cross a plurality of cells based on a specific capability of the user terminal; and a receiving section that simultaneously monitors at least one of the first reference signals and the second reference signals in one or more cells based on the number of at least one of the first reference signals and the second reference signals that can be simultaneously monitored cross the plurality of cells.

### Advantageous Effects of Invention

According to one aspect of the present disclosure, a beam recovery procedure can be appropriately performed even when BFRs in a plurality of cells are supported.

### Brief Description of Drawings

Fig. 1 is a diagram illustrating an example of a beam recovery procedure.
Fig. 2 is a diagram illustrating an example of a schematic structure of a radio communication system according to one embodiment.
Fig. 3 is a diagram illustrating an example of an overall configuration of a radio base station according to one embodiment.
Fig. 4 is a diagram illustrating an example of a functional configuration of the radio base station according to one embodiment.
Fig. 5 is a diagram illustrating an example of an overall configuration of a user terminal according to one embodiment.
Fig. 6 is a diagram illustrating an example of a functional configuration of the user terminal according to one embodiment.
Fig. 7 is a diagram illustrating an example of a hardware configuration of each of the radio base station and the user terminal according to one embodiment.

### Description of Embodiments

In NR, communication using beam forming (BF) has been under study. For example, an UE and/or a base station (for example, gNB (gNodeB)) may use a beam used for signal transmission (also referred to as "transmission beam," "Tx beam" and so on) or a beam used for signal reception (also referred to as "reception beam," "Rx beam" and so on).

An environment where the BF is used is susceptible to disturbance by an obstacle, and hence it is assumed that the radio link quality will be deteriorated. Radio link failure (RLF) may frequently occur due to deterioration of the radio link quality. When the RLF occurs, cell reconnection is necessary, and hence frequent occurrence of the RLF causes deterioration of system throughput.

In NR, in order to suppress occurrence of the RLF, when the quality of a specific beam deteriorates, it is considered to perform a procedure of switching to another beam (which may also be referred to as "beam recovery (BR)," "beam failure recovery (BFR)," "L1/L2 (Layer 1/Layer 2) beam recovery" and so on). Note that the BFR procedure may also be simply referred to as "BFR."

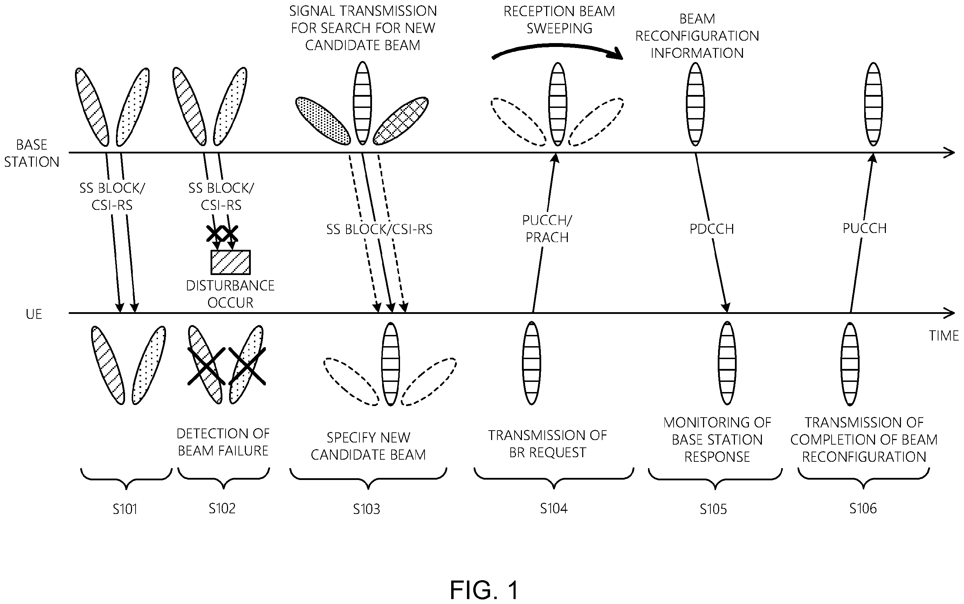

Fig. 1 is a diagram illustrating an example of a beam recovery procedure. The number of beams and so on are examples, and the number is not limited to this. In an initial state (Step S101) of Fig. 1, the UE performs measurement based on a reference signal (RS) resource transmitted using two beams.

The RS may be at least one of a synchronization signal block (SSB) and a channel state information RS (CSI-RS). The SSB may also be referred to as a "SS/PBCH (Physical Broadcast Channel) block" and so on.

The RS may be at least one of a primary synchronization signal (PSS (Primary SS)), a secondary synchronization signal (SSS (Secondary SS)), a mobility reference signal (MRS (Mobility RS)), a signal included in the SSB, CSI-RS, a demodulation reference signal (DMRS), a beam-specific signal and so on, or a signal configured by expanding and/or modifying these (for example, a signal configured by changing the density and/or the period). The RS measured in Step S101 may also be referred to an "RS for beam failure detection."

In Step S102, the radio wave from the base station is disturbed, so that the UE cannot detect the RS for beam failure detection (or the reception quality of the RS is deteriorated). Such disturbance may occur due to the influences of obstacles, fading, interference and so on between the UE and the base station, for example.

The UE detects a beam failure when a given condition is satisfied. For example, when a BLER (Block Error Rate) is equal to or smaller than a threshold for all of the configured RSs for beam failure detection, the UE may detect occurrence of a beam failure.

In addition, the criterion of judgment is not limited to the BLER. Further, instead of the RS measurement or in addition to the RS measurement, beam failure detection may be performed based on a downlink control channel (PDCCH (Physical Downlink Control Channel)) and so on.

Information regarding the RS for beam failure detection (for example, an RS resource, the number, the number of ports, precoding, etc.), information regarding the beam failure detection (for example, the above-mentioned threshold) and so on may be configured in (reported to) the UE using higher layer signaling and so on.

Here, the higher layer signaling may be, for example, any of RRC (Radio Resource Control) signaling, MAC (Medium Access Control) signaling, broadcast information and so on, or a combination thereof.

For the MAC signaling, for example, a MAC control element (MAC CE), a MAC PDU (Protocol Data Unit) and so on may be used. The broadcast information may be, for example, a master information block (MIB), a system information block (SIB), a minimum system information (Remaining Minimum System Information (RMSI)), other system information (OSI) and so on.

A MAC layer of the UE may start a given timer (which may also be referred to as "beam failure detection timer") when a beam failure instance report is received from a PHY layer of the UE. The MAC layer of the UE may trigger the BFR (for example, one of random access procedures described later) when the beam failure instance report is received a certain number of times or more before the timer expires.

The base station may determine that the UE has detected a beam failure when there is no report from the UE or when a given signal (beam recovery request in Step S104) is received from the UE.

In Step S103, the UE starts a search for a new candidate beam to be newly used for communication for beam recovery. The UE may select a new candidate beam corresponding to the RS by measuring a given RS. The RS measured in Step S103 may also be referred to as "an RS for new candidate beam identification." The RS for new candidate beam identification may be the same as or different from the RS for beam failure detection.

The UE may determine a beam corresponding to an RS that satisfies a given condition as a new candidate beam. The UE may determine the new candidate beam based on, for example, an RS in which L1-RSRP (reference signal received power (RSRP) in the physical layer)) exceeds a threshold among configured RSs for new candidate beam identification. In addition, the criterion of judgment is not limited to the L1-RSRP.

Information regarding the RS for new candidate beam identification (for example, an RS resource, the number, the number of ports, precoding, etc.), information regarding the new candidate beam identification (for example, the above-mentioned threshold) and so on may be configured in (reported to) the UE using higher layer signaling and so on. The information regarding the RS for new candidate beam identification may be acquired based on the information regarding the RS for beam failure detection.

In Step S104, the UE that has specified the new candidate beam transmits a beam failure recovery request (BFRQ). The beam recovery request may also be referred to as a "beam recovery request signal," a "beam failure recovery request signal" and so on.

The BFRQ may be transmitted using, for example, at least one of an uplink control channel (PUCCH (Physical Uplink Control Channel)), a random access channel (PRACH (Physical Random Access Channel)), an uplink shared channel (PUSCH (Physical Uplink Shared Channel)), and a configured grant PUSCH.

The BFRQ may include information regarding the new candidate beam specified in Step S103. The resource for the BFRQ may be associated with the new candidate beam. Beam information may be reported using a beam index (BI), a port and/or a resource index of a given reference signal (for example, CSI-RS resource indicator (CRI)) and so on.

In Step S105, the base station that has detected the BFRQ transmits a response signal to the BFRQ (which may also be referred to as a "gNB response" or the like) from the UE. The response signal may include reconfiguration information for one or more beams (for example, DL-RS resource configuration information).

The response signal may be transmitted in an UE common search space of PDCCH, for example. The response signal may be reported using PDCCH (DCI) scrambled in cyclic redundancy check (CRC) by an identifier of the UE (for example, cell-radio RNTI (C-RNTI)). The UE may judge which transmit beam and/or receive beam to use based on beam reconfiguration information.

Regarding the process of Step S105, a period for the UE to monitor a response from the base station (for example, gNB) to the BFRQ may be configured. The period may also be referred to as, for example, a "gNB response window," a "gNB window," a "beam recovery request response window" and so on.

The UE may retransmit the BFRQ if there is no gNB response detected within the window period.

In Step S106, the UE may transmit a message indicating that the beam reconfiguration is completed to the base station. The message may be transmitted by PUCCH or PUSCH, for example.

The beam recovery success (BR success) may represent a case where the process reaches Step S106, for example. Meanwhile, the beam recovery failure (BR failure) may correspond to, for example, that the BFRQ transmission has reached a given number of times or that the beam failure recovery timer (Beam-failure-recovery-Timer) has expired.

Note that the numbers of these steps are merely numbers for description, and a plurality of steps may be combined or the order may be changed. Further, whether or not to implement BFR may be configured in the UE by using higher layer signaling.

In NR, CB-BFR (Contention-Based BFR) which is a BFR based on a collision random access (RA (Random Access)) procedure and CF-BFR (Contention-Free BFR) which is a BFR based on a non-collision random access procedure have been under study. In CB-BFR and CF-BFR, the UE may transmit a preamble (which is also referred to as a "RA preamble," a "random access channel (PRACH (Physical Random Access Channel))," a "RACH preamble" and so on) as a BFRQ using a PRACH resource.

In CB-BFR, the UE may transmit a preamble randomly selected from one or more preambles. On the other hand, in CF-BFR, the UE may transmit a preamble uniquely allocated from the base station to the UE. In CB-BFR, the base station may allocate the same preamble to a plurality of UEs. In CF-BFR, the base station may allocate preambles individually to the UEs.

CB-BFR and CF-BFR may also be referred to as "CB PRACH-based BFR (CBRA-BFR (contention-based PRACH-based BFR))" and "CF PRACH-based BFR (CFRA-BFR (contention-free PRACH-based BFR)), respectively. CBRA-BFR may also be referred to as "CBRA for BFR." CFRA-BFR may also be referred to as "CFRA for BFR."

In CB-BFR, when the base station receives a certain preamble as BFRQ, the base station may not be able to specify to which UE the preamble is transmitted. The base station can specify the identifier (for example, C-RNTI) of the UE that transmitted the preamble by performing contention resolution between BFRQ and completion of beam reconfiguration.

The signal transmitted by the UE during the RA procedure (for example, preamble) may be assumed to be BFRQ.

In either CB-BFR or CF-BFR, the information regarding the PRACH resource (RA preamble) may be reported by, for example, higher layer signaling (RRC signaling and so on). For example, the information may include information indicating a correspondence relationship between the detected DL-RS (beam) and the PRACH resource, and different PRACH resources may be associated with each DL-RS.

Detection of beam failure may be performed at the MAC layer. For CB-BFR, contention resolution may be judged to be successful when the UE receives PDCCH corresponding to the C-RNTI for itself.

RA parameters of CB-BFR and CF-BFR may be composed of the same parameter set. Different values may be configured for the RA parameters of CB-BFR and CF-BFR respectively.

For example, the parameter indicating the time length for monitoring the gNB response in CORESET for beam failure recovery response after BFRQ (which may also be referred to as "ResponseWindowSize-BFR") may be applied to any one of CF-BFR and CB-BFR.

Incidentally, in NR, it is considered to support not only BFR in a primary cell (PCell) but also BFR in a secondary cell (SCell). Although 0 or 1 (maximum 1) is considered as the number of SCells that support BFR, it is preferable that a plurality of SCells support BFR from the viewpoint of improving the flexibility of gNB scheduling.

However, when BFR is supported in a plurality of SCells, a large number of PRACH resources associated with new candidate beams in the plurality of SCells are required in at least one of the PCell and the plurality of SCells. In addition, the UE needs to measure a large number of beams for beam failure detection and new candidate beam identification. As a result, the power consumption of the UE may increase or communication throughput may decrease.

Therefore, the present inventors have focused on a method of appropriately controlling (including configuring, reporting and so on) the number of beams to be monitored by the UE for BFR, when BFR is supported in a plurality of SCells (which may also be referred to as "component carriers (CCs)").

Hereinafter, embodiments according to the present disclosure will be described in detail with reference to the drawings. The radio communication methods according to the respective embodiments may be applied independently or in combination.

The PCell may be replaced by a "primary secondary cell (PSCell)."

### (Radio Communication Method)

In one embodiment, the number of at least one of beams for beam failure detection and beams for new candidate beam identification that can be simultaneously monitored by the UE across a plurality of CCs (cross CCs) may be determined based on the capability of the UE.

In the following, "the number of at least one of beams for beam failure detection and beams for new candidate beam identification that can be simultaneously monitored by the UE cross a plurality of CCs" is, for simplicity, referred to as "the number of candidate beams the UE can monitor simultaneously for the BFR cross the CCs," "the number of simultaneous measurement beams for BFR" and so on. The candidate beam, the measurement beam and so on may mean one or both of a beam for beam failure detection and a beam for new candidate beam identification.

The word such as the number of beams and the number of resources may be replaced by the number of at least one of CSI-RS and SS/PBCH blocks, the number of at least one of CSI-RS resource configuration indexes and SS/PBCH block indexes of the monitored target, and so on. Further, the beam may be replaced by a resource, a reference signal, a reference signal resource, a CSI-RS, an SS/PBCH block, an index relating to at least one of these and so on.

### <UE capability information regarding number of simultaneous measurement beams for BFR>

The UE may report the UE capability information on the number of simultaneous measurement beams for BFR to the base station. The UE may monitor the measurement beams in the BFR procedure by the number of beams that does not exceed the reported number of simultaneous measurement beams for BFR in all serving cells.

The base station may report, to the UE, the number of simultaneous measurement beams for BFR used by the UE based on the capability information reported from the UE, using higher layer signaling, physical layer signaling, and a combination thereof. Upon receiving the information on the number of simultaneous measurement beams for BFR, the UE may determine the number of simultaneous measurement beams for BFR to be actually used based on the information.

Further, other UE capability information may be used as the capability information on the number of simultaneous measurement beams for BFR.

For example, as UE capability information for BFR, the following items (1) to (3) are specified:
(1) Maximum number of CSI-RS resources cross all CCs for the UE to monitor PDCCH quality (which may also be referred to as "maxNumberCSI-RS-BFR"). For example, a value from 1 to 64 may be configured,
(2) Maximum number of different SSBs cross all CCs for UE to monitor PDCCH quality (which may also be referred to as "maxNumberSSB-BFR"). For example, a value from 1 to 64 may be configured,
(3) Maximum number of different CSI-RS and/or SSB resources cross all CCs for new beam (new candidate beam) identification (which may also be referred to as "maxNumberCSI-RS-SSB-BFR"). For example, a value of 1 to 256 may be configured.

The UE capability information of the items (1) - (3) above is a value assuming a case where the number of SCell CCs is 1 at maximum, and a value not assuming a case where the number of SCell CCs exceeds 1. However, in the present disclosure, it may be considered to be a definition including a value assuming a case where the number of SCell CCs exceeds 1.

For example, maxNumberCSI-RS-BFR may be used as the maximum number of beams (number of CSI-RS resources) for beam failure detection that can be simultaneously monitored cross a plurality of CCs (and thus the number of simultaneous measurement beams for BFRs cross a plurality of CCs).

maxNumberSSB-BFR may be used as the maximum number of beams (number of SSB resources) for beam failure detection that can be simultaneously monitored cross a plurality of CCs (and thus the number of simultaneous measurement beams for BFRs cross a plurality of CCs).

maxNumberCSI-RS-BFR may be used as the maximum number of beams (the number of RS resources of CSI-RS and/or SSB) for new candidate beam identification that can be simultaneously monitored cross a plurality of CCs (and thus the number of simultaneous measurement beams for BFRs cross a plurality of CCs).

### <UE operation regarding the number of simultaneous measurement beams for BFRs>

From the viewpoint of reducing the power consumption of the UE, the number of simultaneous measurement beams for BFRs is preferably a fixed value regardless of the number of CCs configured in the UE. The number of simultaneous measurement beams for BFRs may be 2^{x} (X≧0), for example, 1, 2, 4, 8, 16, 32, 64 and so on. When the number of simultaneous measurement beams for BFRs is 0, it may be assumed that the UE can monitor the BFR beam (at least one of the beam failure detection beam and the new candidate beam) only by the PCell.

The UE may autonomously judge the allocation of the number of simultaneous measurement beams for BFRs to each CC, or may determine it according to the configuration information from the base station. For example, the base station may configure the number of at least one of beams for beam failure detection and beams for new candidate beam identification that can be simultaneously monitored in the UE for each CC.

The specific allocation will be described by taking the case where the number of simultaneous measurement beams for BFRs is eight as an example. For example, when CA of 2CC (CC#1 and CC#2) is configured, the UE may monitor four BFR beams in the CC#1 at a certain timing and may monitor four BFR beams in the CC#2 simultaneously. The number to be monitored may be determined by the UE or may be determined according to the configuration by the base station.

Further, when CA of 2CC (CC#1 and CC#2) is configured, it may be assumed that the UE monitors eight BFR beams in the CC#1 at a certain timing and cannot monitor BFR beams in the CC#2 simultaneously. As described above, when the BFR is not generated in the CC#2, the UE may perform control for concentrating monitor of the BFR beams on the CC#1 in which BFR is generated.

When CA of 4CC (CC#1-#4) is configured, it may be assumed that the UE monitors two BFR beams at each CC at a certain timing.

In this way, the allocation of the number of monitor beams to each CC may be performed evenly for each CC (the number of beams monitored in each CC may be substantially the same) or may be weighted. The allocation of the number of monitor beams to each CC may be dynamically changed or may be fixed. The allocation described here is an example, and the present invention is not limited to this.

The UE may monitor the BFR beam that cannot be monitored at a certain timing at another timing. A priority (which may also be referred to as "monitor timing information" and so on) may be configured for each BFR beam.

When the number of BFR beams that can be monitored in a certain CC is less than the configured number of all BFR beams, the monitoring of beams with low priority may be skipped. The UE may determine the beam to be monitored surely based on the priority, or may decide whether or not to monitor the beam when the monitor timing comes. For example, the UE may perform control so as to monitor a beam #1 with high priority at each monitor timing, and monitor one of beams #2 and #3 with low priority at each monitor timing, and so on.

The UE may autonomously judge the priority of the BFR beam based on the measured quality (L1-RSRP and so on).

### <Number of SCells that support BFR>

At least one of the number of SCells and the number of cells that support BFR may be determined (limited) based on at least one of UE capability information on the number of simultaneous measurement beams for BFR and the UE capability information of the items (1) to (3).

The base station may report, to the UE, at least one of the number of SCells and the number of the cells that support BFR in the UE based on at least one of UE capability information on the number of simultaneous measurement beams for BFR reported from the UE and the UE capability information of the items (1) to (3), using higher layer signaling, physical layer signaling, and a combination thereof.

Further, the base station may report, to the UE, at least one of the SCell index and the cell index that support BFR in the UE based on at least one of UE capability information, using higher layer signaling, physical layer signaling, and a combination thereof.

The UE may allocate the number of simultaneous measurement beams for BFRs to cells corresponding to the number of cells that support BFR. For example, if the number of cells configured is five, and the number of cells that support BFR is three, the UE can allocate the number of simultaneous measurement beams for BFRs in these three cells (that is, these do not have to be distributed to all configured cells).

According to the embodiment described above, the number of beams to be monitored by the UE for BFR cross a plurality of CCs can be appropriately controlled, and the UE operation can be suitably performed based on the number of beams.

### <Variations>

In the above-described embodiment, the number described as being reported as UE capability information (for example, the number of simultaneous measurement beams for BFRs) may be a value that does not consider a deactivated SCell and considers only an activated SCell. Hereinafter, considering a cell (CC) with UE capability information may mean controlling the cell based on the UE capability information (for example, the cell is a control target of BFR).

Further, in the above-described embodiment, the number described as being reported as UE capability information (for example, the number of simultaneous measurement beams for BFRs) may be a value that does not consider an inactive bandwidth part (BWP) and considers only an active bandwidth part (cells included in the active BWP) .

Network (for example, base station) can configure BFR to all CCs for UE (BFR can be configured to be enabled), but the number of activated cells for which BFR is configured may be configured so as not to exceed the capability of the UE. The UE may assume that the number of activated cells for which BFR is configured is equal to or less than the number of simultaneous measurement beams for BFRs.

In addition, when the UE is configured to dual connectivity (DC) (operating in DC), the UE capability information described in the above-described embodiment may be reported for each cell group. The DC may be DC between NRs or LTE-NR DC.

For example, the number of simultaneous measurement beams for BFRs for a first cell group and the number of simultaneous measurement beams for BFRs for a second cell group may be reported as different UE capability information. These capability information may be reported via at least one of the first cell group and the second cell group.

The UE capability information described in the above-described embodiment may be capability information that considers only cells for which UL is configured. Here, the UL may or may not include SUL (Supplemental UpLink). The UE may assume that the PRACH for BFR is transmitted in the SCell for which UL is configured.

The UE capability information described in the above-described embodiment may be capability information that does not consider a LAA (Licensed-Assisted Access) cell (for example, LAA SCell). The LAA cell may be replaced by a CC that corresponds to an unlicensed carrier (unlicensed CC), a CC that uses frame structure 3 (FS3), a CC that applies LBT (Listen Before Talk) and so on. The UE may assume that BFR in the LAA cell is prohibited.

Note that the words "simultaneous," "simultaneously" and so on in the present disclosure may be replaced by "at the same timing," "at overlapping timing," "overlapping," "within a certain period" and so on. The "timing," "period" and so on may be at least one of one or more symbols, slots, subframes and so on.

### (Radio Communication System)

Now, a configuration of a radio communication system according to the embodiment of the present disclosure will be described below. In this radio communication system, communication is performed using at least one of the radio communication methods described in the embodiments described above.

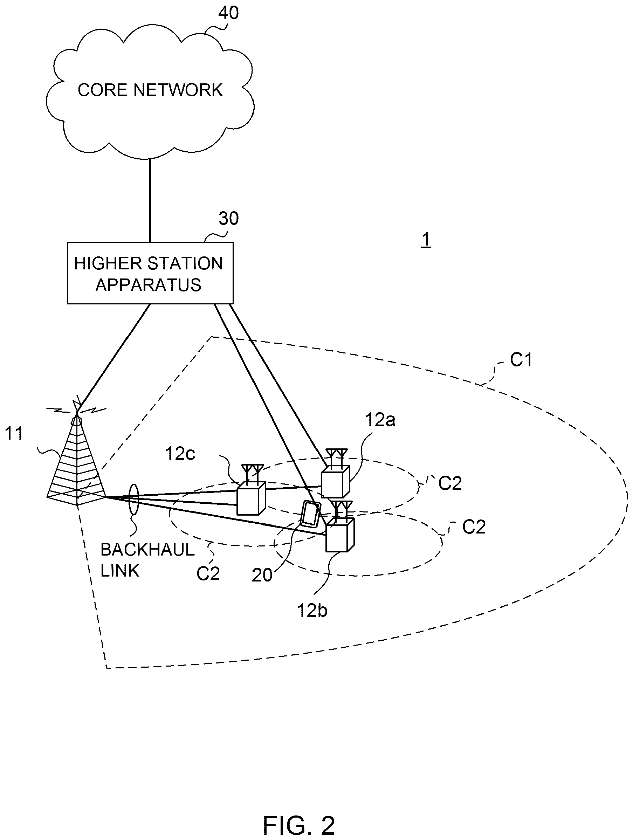

Fig. 2 is a diagram illustrating an example of a schematic structure of a radio communication system according to one embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

The radio communication system 1 may also be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA(Future Radio Access)," "New-RAT (Radio Access Technology)," and so on, or may also be referred to as a system that implements these.

The radio communication system 1 includes a radio base station 11 that forms a macro cell C1 covering a relatively wide coverage, and radio base stations 12 (12a to 12c) that are arranged within the macro cell C1 and that form small cells C2, which are narrower than the macro cell C1. Also, user terminals 20 are arranged in the macro cell C1 and in each small cell C2. The arrangement, number and so on of each cell and the user terminals 20 are not limited to those of aspects illustrated in the drawings.

The user terminals 20 can connect with both the radio base station 11 and the radio base stations 12. It is assumed that the user terminal 20 uses the macro cell C1 and the small cells C2 simultaneously by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (also referred to as an "existing carrier," a "legacy carrier" and so on). Meanwhile, between the user terminals 20 and the radio base stations 12, a carrier of a relatively high frequency band (for example, 3.5 GHz, 5 GHz, etc.) and a wide bandwidth may be used, or the same carrier as that used in the radio base station 11 may be used. Note that the structure of the frequency band for use in each radio base station is by no means limited to these.

Moreover, the user terminal 20 can perform communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier spacing, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain and so on.

For example, for a certain physical channel, when the subcarrier spacing differs and/or the numbers of OFDM symbols are different between the constituent OFDM symbols, this case may be described that they are different in numerology.

The radio base station 11 and the radio base station 12 (or two radio base stations 12) may be connected by wire (for example, means in compliance with the CPRI (Common Public Radio Interface) such as optical fiber, an X2 interface and so on) or wirelessly.

The radio base station 11 and the radio base station 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may also be referred to as a "macro base station," a "central node," an "eNB (eNodeB)," a "transmitting/receiving point" and so on. Also, the radio base stations 12 are radio base stations having local coverages, and may also be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

Each of the user terminals 20 is a terminal to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. The uplink and downlink radio access schemes are not limited to combinations of these, and other radio access schemes may be used.

In the radio communication system 1, a downlink shared channel (PDSCH (Physical Downlink Shared Channel)), which is used by each user terminal 20 on a shared basis, a broadcast channel (PBCH (Physical Broadcast Channel)), downlink L1/L2 control channels and so on are used as downlink channels. User data, higher layer control information and SIBs (System Information Blocks) are communicated in the PDSCH. Further, MIB (Master Information Block) is communicated by PBCH.

The downlink L1/L2 control channels include at least one of a downlink control channel (PDCCH (Physical Downlink Control channel) and/or an EPDCCH (Enhanced Physical Downlink Control CHannel)), a PCFICH (Physical Control Format Indicator CHannel), and a PHICH (Physical Hybrid-ARQ Indicator CHannel). Downlink control information (DCI), including PDSCH and/or PUSCH scheduling information, and so on, is communicated by the PDCCH.

Note that scheduling information may be reported via DCI. For example, the DCI to schedule receipt of DL data may also be referred to as "DL assignment," and the DCI to schedule transmission of UL data may also be referred to as "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs" and so on) in response to the PUSCH is communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated by PUSCH. Also, in the PUCCH, downlink radio link quality information (CQI (Channel Quality Indicator)), delivery acknowledgment information, scheduling requests (SRs) and so on are communicated. By means of the PRACH, random access preambles for establishing connections with cells are communicated.

In the radio communication system 1, cell-specific reference signals (CRSs), channel state information-reference signals (CSI-RSs), demodulation reference signals (DMRSs), positioning reference signals (PRSs) and so on are communicated as downlink reference signals. Also, in the radio communication system 1, measurement reference signals (SRSs (Sounding Reference Signals)), demodulation reference signals (DMRSs) and so on are communicated as uplink reference signals. Note that DMRSs may also be referred to as "user terminal-specific reference signals (UE-specific Reference Signals)." Also, the reference signals to be communicated are by no means limited to these.

### <Radio Base Station>

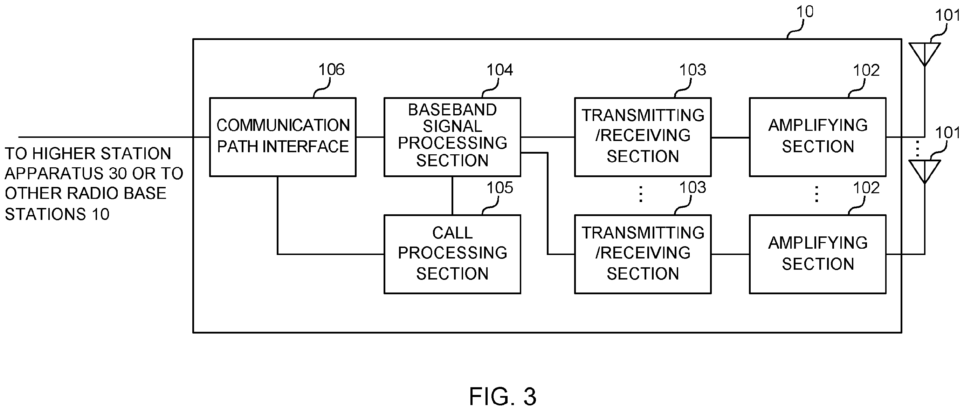

Fig. 3 is a diagram illustrating an example of an overall configuration of a radio base station according to one embodiment. Each radio base station 10 has a plurality of transmitting/receiving antennas 101, amplifying sections 102, transmitting/receiving sections 103, a baseband signal processing section 104, a call processing section 105, and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processing such as channel coding and inverse fast Fourier transform, and are forwarded to the transmitting/receiving sections 103.

Each of the transmitting/receiving sections 103 converts a baseband signal, which is pre-coded for each antenna and output from the baseband signal processing section 104, into a signal in a radio frequency band, and transmits such a radio frequency signal. A radio frequency signal subjected to the frequency conversion in each transmitting/receiving section 103 is amplified in the amplifying section 102, and transmitted from each transmitting/receiving antenna 101. The transmitting/receiving section 103 can be constituted by a transmitters/receiver, a transmitting/receiving circuit or a transmitting/receiving apparatus that can be described based on general understanding of the technical field to which the present disclosure pertains. Note that the transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as configuration and releasing) for communication channels, manages states of the radio base stations 10, manages the radio resources, and so on.

The communication path interface 106 transmits and receives signals to and from the higher station apparatus 30 via a given interface. Moreover, the communication path interface 106 may transmit and receive (perform backhaul signaling for) signals with other radio base stations 10 via an inter-base station interface (for example, optical fiber in compliance with CPRI (Common Public Radio Interface), and the X2 interface).

Note that the transmitting/receiving section 103 may further include an analog beamforming section that performs analog beamforming. The analog beamforming section can be constituted by an analog beamforming circuit (for example, a phase shifter, a phase shift circuit) or analog beamforming apparatus (for example, a phase shifter) described based on general understanding of the technical field to which the present disclosure pertains. Also, the transmitting/receiving antenna 101 can be constituted by an array antenna, for example. Also, the transmitting/receiving section 103 is configured such that that single BF and multi BF can be used.

The transmitting/receiving section 103 may transmit a signal using a transmission beam and may receive a signal using a reception beam. The transmitting/receiving section 103 may transmit and/or receive a signal using a given beam determined by the control section 301.

The transmitting/receiving section 103 may receive and/or transmit various types of information described in each of the above-described embodiments from/to the user terminal 20.

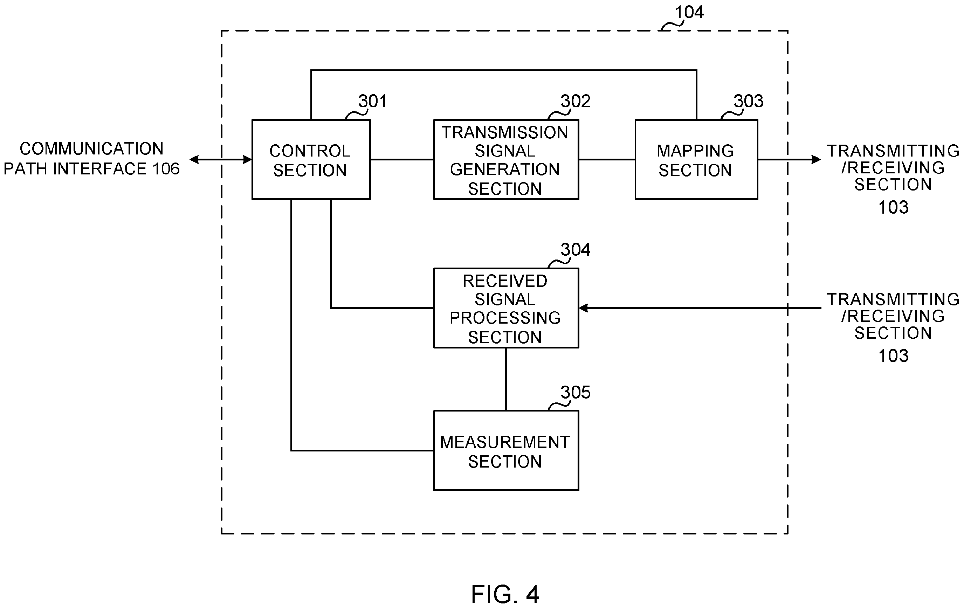

Fig. 4 is a diagram illustrating an example of a functional structure of the radio base station according to one embodiment. Note that, although this example will primarily show functional blocks that pertain to characteristic parts of the present embodiment, it may be assumed that the radio base station 10 has other functional blocks that are necessary for radio communication as well.

The baseband signal processing section 104 includes at least a control section (scheduler) 301, a transmission signal generation section 302, a mapping section 303, a received signal processing section 304, and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or a control apparatus that can be described based on general understanding of the technical field to which the present disclosure pertains.

The control section 301, for example, controls the generation of signals in the transmission signal generation section 302, the allocation of signals by the mapping section 303 and so on. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgment information). The control section 301 controls the generation of downlink control signals, downlink data signals and so on, based on the results of deciding whether or not retransmission control is necessary for uplink data signals, and so on.

The control section 301 controls scheduling of synchronization signals (for example, PSS/SSS) and downlink reference signals (for example, CRS, CSI-RS, DMRS) and so on.

The control section 301 may perform control to form a transmission beam and/or a reception beam using a digital BF (for example, precoding) by the baseband signal processing section 104 and/or an analog BF (for example, phase rotation) by the transmitting/receiving sections 103.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or a signal generation apparatus that can be described based on general understanding of the technical field to which the present disclosure pertains.

For example, the transmission signal generation section 302 generates DL assignments, which report downlink data allocation information, and/or UL grants, which report uplink data allocation information, based on commands from the control section 301. DL assignments and UL grants are both DCI, and follow the DCI format. Further, the downlink data signals are subjected to coding processing, and modulation processing and so on in accordance with a coding rate, a modulation scheme and the like, which are determined based on channel state information (CSI) reported from each user terminal 20.

The mapping section 303 maps the downlink signals generated in the transmission signal generation section 302 to given radio resources based on commands from the control section 301, and outputs these to the transmitting/receiving sections 103. The mapping section 303 can be constituted by a mapper, a mapping circuit or a mapping apparatus that can be described based on general understanding of the technical field to which the present disclosure pertains.

The received signal processing section 304 performs receiving processes (for example, demapping, demodulation, decoding, etc.) of received signals that are input from the transmitting/receiving sections 103. Here, the received signals include, for example, uplink signals transmitted from the user terminals 20 (uplink control signals, uplink data signals, uplink reference signals, etc.). The received signal processing section 304 can be constituted by a signal processor, a signal processing circuit or a signal processing apparatus that can be described based on general understanding of the technical field to which the present disclosure pertains.

The received signal processing section 304 outputs the decoded information that is acquired by the receiving processes to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or a measurement apparatus that can be described based on general understanding of the technical field to which the present disclosure pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), transmission path information (for example, CSI), and so on. The measurement results may be output to the control section 301.

The control section 301 may control the configuration of radio link failure (RLF) and/or beam recovery (BR) based on the configuration information regarding RLF and/or BR.

The control section 301 may control radio link monitoring (RLM) and/or beam recovery (BR) for the user terminal 20. The control section 301 may perform control of transmitting a response signal to the user terminal 20 in response to the beam recovery request.

The control section 301 may judge the number (number of simultaneous measurement beams for BFRs) of at least one of first reference signals for beam failure detection (RSs for beam failure detection) and second reference signals for new candidate beam identification (RSs for new candidate beam identification) that can be simultaneously monitored cross a plurality of cells based on the UE capability information reported from the user terminal 20.

### (User Terminal)

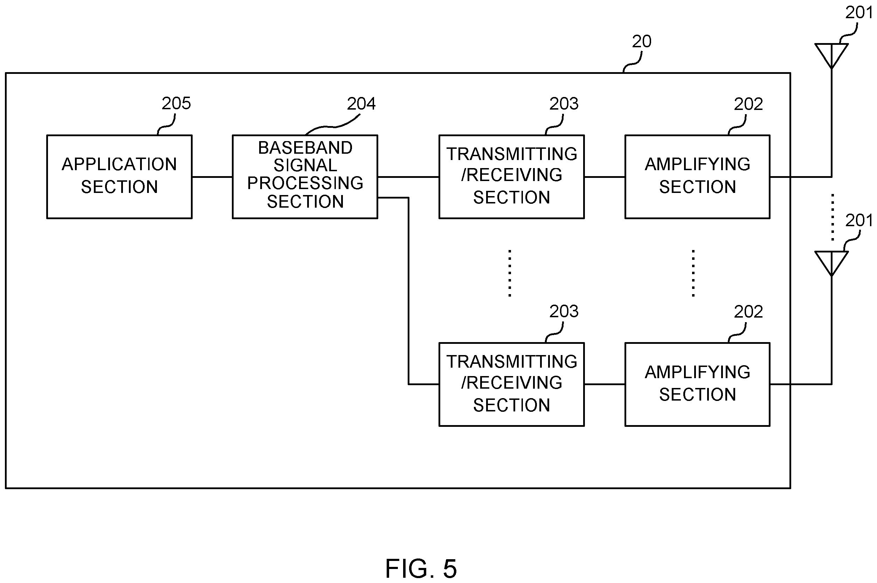

Fig. 5 is a diagram illustrating an example of an overall configuration of a user terminal according to one embodiment. The user terminal 20 includes a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. The transmitting/receiving section 203 can be constituted by a transmitter/receiver, a transmitting/receiving circuit or a transmitting/receiving apparatus that can be described based on general understanding of the technical field to which the present disclosure pertains. Note that the transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

Baseband signals that are output from the baseband signal processing section 204 are converted into a radio frequency band in the transmitting/receiving sections 203 and transmitted. The radio frequency signals having been subjected to frequency conversion in the transmitting/receiving sections 203 are amplified in the amplifying sections 202, and transmitted from the transmitting/receiving antennas 201.

Note that the transmitting/receiving section 203 may further include an analog beamforming section that performs analog beamforming. The analog beamforming section can be constituted by an analog beamforming circuit (for example, a phase shifter, a phase shift circuit) or analog beamforming apparatus (for example, a phase shifter) described based on general understanding of the technical field to which the present disclosure pertains. Also, the transmitting/receiving antenna 201 can be constituted by an array antenna, for example. Also, the transmitting/receiving section 203 is configured such that that single BF and multi BF can be used.

The transmitting/receiving section 203 may transmit a signal using a transmission beam and may receive a signal using a reception beam. The transmitting/receiving section 203 may transmit and/or receive a signal using a given beam determined by the control section 401.

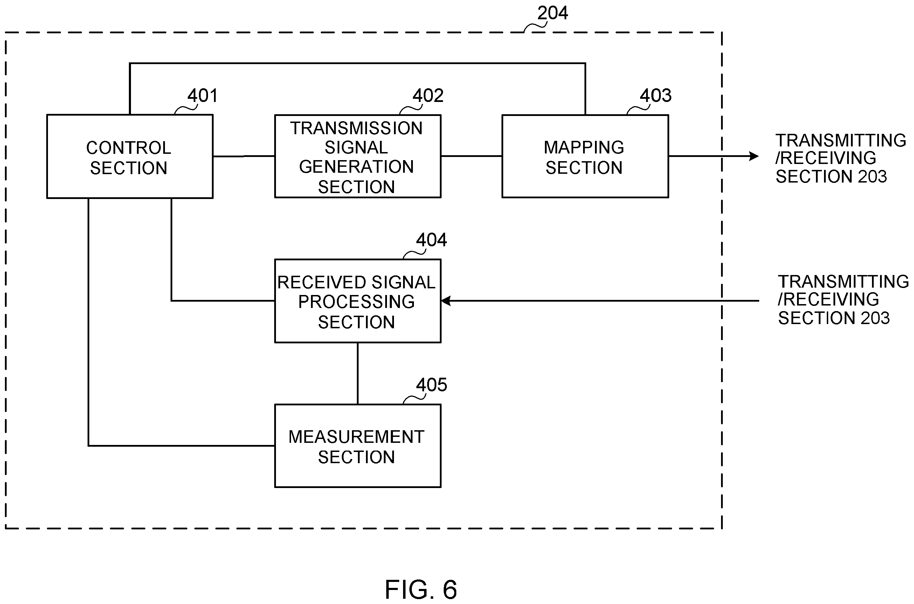

Fig. 6 is a diagram illustrating an example of a functional configuration of the user terminal according to one embodiment. Note that, although this example will primarily show functional blocks that pertain to characteristic parts of the present embodiment, it may be assumed that the user terminal 20 has other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these configurations may be included in the user terminal 20, and some or all of the configurations need not be included in the baseband signal processing section 204.

The control section 401 controls the whole of the user terminal 20. The control section 401 can be constituted by a controller, a control circuit or a control apparatus that can be described based on general understanding of the technical field to which the present disclosure pertains.

The control section 401, for example, controls the generation of signals in the transmission signal generation section 402, the allocation of signals in the mapping section 403, and so on. Furthermore, the control section 401 controls the signal receiving processes in the received signal processing section 404, the measurements of signals in the measurement section 405 and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

The control section 401 may perform control to form a transmission beam and/or a reception beam using a digital BF (for example, precoding) by the baseband signal processing section 204 and/or an analog BF (for example, phase rotation) by the transmitting/receiving section 203.

Further, when the control section 401 acquires various types of information reported from the radio base station 10 from the received signal processing section 404, the control section 401 may update the parameter used for control based on the information.

The transmission signal generation section 402 generates uplink signals (uplink control signals, uplink data signals, uplink reference signals and so on) based on commands from the control section 401, and outputs these signals to the mapping section 403. The transmission signal generation section 402 can be constituted by a signal generator, a signal generating circuit or a signal generation apparatus that can be described based on general understanding of the technical field to which the present disclosure pertains.

For example, the transmission signal generation section 402 generates uplink control signals such as delivery acknowledgment information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs these to the transmitting/receiving section 203. The mapping section 403 can be constituted by a mapper, a mapping circuit or a mapping apparatus that can be described based on general understanding of the technical field to which the present disclosure pertains.

The received signal processing section 404 performs receiving processes (for example, demapping, demodulation, decoding, etc.) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or a signal processing apparatus that can be described based on general understanding of the technical field to which the present disclosure pertains. Also, the received signal processing section 404 can constitute the receiving section according to the present disclosure.

The received signal processing section 404 outputs the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or a measurement apparatus that can be described based on general understanding of the technical field to which the present disclosure pertains.

For example, the measurement section 405 may perform RRM measurements, CSI measurements and so on based on the received signals. The measurement section 405 may measure the received power (for example, RSRP), the received quality (for example, RSRQ, SINR, SNR, etc.), the signal strength (for example, RSSI), transmission path information (for example, CSI), and so on. The measurement results may be output to the control section 401.

The transmitting/receiving section 203 may receive and/or transmit various types of information described in each of the above-described embodiments from/to the radio base station 10. For example, the transmitting/receiving section 203 may transmit a beam recovery request to the radio base station 10.

The control section 401 may control radio link monitoring (RLM) and/or beam recovery (BR) based on the measurement result of the measurement section 405.

The control section 401 may include a MAC layer processing section and a PHY layer processing section. The MAC layer processing section and/or the PHY layer processing section may be implemented by any one of the control section 401, the transmission signal generation section 402, the mapping section 403, the received signal processing section 404, and the measurement section 405, or combinations of these.

The MAC layer processing section carries out processing of the MAC layer, and the PHY layer processing section carries out processing of the PHY layer. For example, downlink user data, broadcast information and so on input from the PHY layer processing section may be output to a higher layer processing section that performs processing of the RLC layer, PDCP layer and so on via the processing of the MAC layer processing section.

The PHY layer processing section may detect a beam failure. The PHY layer processing section may report information regarding the detected beam failure to the MAC layer processing section.

The MAC layer processing section may trigger the transmission of the beam recovery request in the PHY layer processing section. For example, the MAC layer processing section may trigger the transmission of the beam recovery request based on the information regarding the beam failure reported from the PHY layer processing section.

The control section 401 may determine the number (number of simultaneous measurement beams for BFRs) of at least one of the first reference signals for beam failure detection (RSs for beam failure detection) and the second reference signals for new candidate beam identification (RSs for new candidate beam identification) that can be simultaneously monitored cross a plurality of cells based on the specific capability of the user terminal.

The transmitting/receiving section 203 may simultaneously monitor at least one of the first reference signals and the second reference signals in one or more cells based on the number of simultaneous measurement beams for BFRs. The transmitting/receiving section 203 may process the monitor assuming that the maximum number of the first reference signals and the second reference signals that can be monitored in total is the number of simultaneous measurement beams for BFRs.

The control section 401 may assume, as the specific capability, a capability that is obtained by replacing the capability for beam failure recovery assuming a case where the number of secondary cells to be configured is one (at least one of maxNumberCSI-RS-BFR, maxNumberSSB-BFR, maxNumberCSI-RS-SSB-BFR of an RRC parameter, and the like) as a capability assuming a case where the number of secondary cells to be configured exceeds one.

The control section 401 may determine the number of simultaneous measurement beams for BFRs regardless of the number of cells to be configured.

The control section 401 may determine the number of secondary cells that support the beam failure recovery based on the specific capability.

### (Hardware configuration)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be implemented by a single apparatus physically or logically aggregated, or may be implemented by directly or indirectly connecting two or more physically or logically separate apparatuses (using, for example wires, radio, etc.) and using the plurality of these apparatuses.

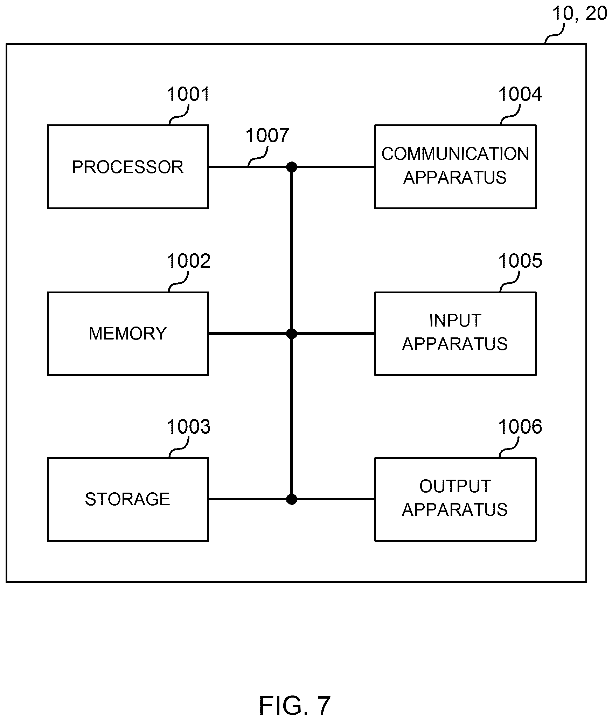

For example, the radio base station, user terminals and so on according to one embodiment of the present disclosure may function as a computer that executes the processes of the radio communication method of the present disclosure. Fig. 7 is a diagram illustrating an example of a hardware configuration of each of the radio base station and the user terminal according to one embodiment. Physically, the above-described radio base stations 10 and user terminals 20 may be formed as a computer apparatus that includes a processor 1001, a memory 1002, a storage 1003, a communication apparatus 1004, an input apparatus 1005, an output apparatus 1006, and a bus 1007.

Note that, in the following description, the word "apparatus" may be replaced by "circuit," "device," "unit" and so on. Note that the hardware structure of the radio base station 10 and the user terminal 20 may be designed to include one or more of each apparatus illustrated in the drawings, or may be designed not to include part of the apparatus.

For example, although only one processor 1001 is illustrated, a plurality of processors may be provided. Furthermore, processes may be executed by one processor, or processes may be executed simultaneously, in sequence, or in different manners by one or more processors. Note that the processor 1001 may be implemented with one or more chips.

Each function of the radio base station 10 and the user terminal 20 is implemented, for example, in such a manner that, by causing hardware such as the processor 1001 and the memory 1002 to read given software (program), the processor 1001 performs a computation, controls communication via the communication apparatus 1004, controls at least one of reading and writing of data in the memory 1002 and the storage 1003, and so on.

For example, the processor 1001 operates an operating system to control the whole of the computer. The processor 1001 may be configured with a central processing unit (CPU), which includes interfaces with peripheral apparatuses, a control apparatus, a computing apparatus, a register and so on. For example, the above-described baseband signal processing section 104 (204), call processing section 105 and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments may be used. For example, the control section 401 of the user terminal 20 may be implemented by a control program that is stored in the memory 1002 and operates in the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may also be referred to as a "register," a "cache," a "main memory (primary storage apparatus)" and so on. The memory 1002 can store a program (program code), a software module and so on, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM), etc.), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may also be referred to as a "secondary storage apparatus."

The communication apparatus 1004 is hardware (transmitting/receiving device) for allowing inter-computer communication by using at least one of wired network and wireless network, and may be referred to as, for example, a "network device," a "network controller," a "network card," a "communication module" and so on. The communication apparatus 1004 may be configured to include a high frequency switch, a duplexer, a filter, a frequency synthesizer and so on in order to implement, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device that receives input from the outside (for example, a keyboard, a mouse, a microphone, a switch, a button, a sensor, etc.). The output apparatus 1006 is an output device that implements output to the outside (for example, a display, a speaker, an LED (Light Emitting Diode) lamp, etc.). The input apparatus 1005 and the output apparatus 1006 may have an integrated configuration (for example, a touch panel).

Furthermore, the apparatuses such as the processor 1001 and the memory 1002 are connected to one another by the bus 1007 for information communication. The bus 1007 may be formed with a single bus, or may be formed with buses that vary between apparatuses.

Also, the radio base station 10 and the user terminal 20 may be configured to include hardware such as a microprocessor, a digital signal processor (DSP), an ASIC (Application-Specific Integrated Circuit), a PLD (Programmable Logic Device), and an FPGA (Field Programmable Gate Array), and all or some of each of the functional blocks may be implemented by the hardware. For example, the processor 1001 may be implemented with at least one of these pieces of hardware.

### (Variations)

Note that the terminology used in the present disclosure and the terminology that is needed to understand the present disclosure may be replaced by other terms that convey the same or similar meanings. For example, at least one of "channels" and "symbols" may be replaced by "signals" (or "signaling"). Also, "signals" may be "messages." A reference signal may be abbreviated as an "RS," and may also be referred to as a "pilot," a "pilot signal" and so on, depending on which standard applies. Furthermore, a component carrier (CC) may also be referred to as a "cell," a "frequency carrier," a "carrier frequency" and so on.

Furthermore, a radio frame may be composed of one or more periods (frames) in a time domain. Each of one or more periods (frames) constituting a radio frame may also be referred to as a "subframe." Furthermore, a subframe may be composed of one or more slots in the time domain. The subframe may be a fixed time duration (for example, 1 ms) that is not dependent on numerology.

Furthermore, the slot may be composed of one or more symbols (OFDM (Orthogonal Frequency Division Multiplexing) symbols, SC-FDMA (Single Carrier Frequency Division Multiple Access) symbols and so on) in the time domain. Further, the slot may be a unit of time based on numerology.

Also, the slot may include a plurality of minislots. Each minislot may be composed of one or more symbols in the time domain. Also, the minislot may also be referred to as a "subslot." The minislot may be composed of fewer symbols than a slot. PDSCH and PUSCH transmitted in a time unit larger than a minislot may also be referred to as "PDSCH/PUSCH mapping type A." PDSCH and PUSCH) transmitted using a minislot may also be referred to as "PDSCH/PUSCH mapping type B."

The radio frame, the subframe, the slot, the minislot, and the symbol all represent the time unit in signal communication. A radio frame, a subframe, a slot, a minislot and a symbol may be called by other applicable names, respectively. For example, one subframe may also be referred to as "transmission time interval (TTI)," a plurality of consecutive subframes may also be referred to as "TTI," or one slot or one minislot may also be referred to as "TTI." That is, at least one of a subframe and a TTI may be a subframe (1 ms) in existing LTE, may be a shorter period than 1 ms (for example, one to thirteen symbols), or may be a longer period of time than 1 ms. Note that the unit to represent the TTI may also be referred to as a "slot," a "minislot" and so on, instead of a "subframe."

Here, a TTI refers to the minimum time unit of scheduling in radio communication, for example. For example, in LTE systems, a radio base station schedules radio resources (frequency bandwidth and transmission power that can be used in each user terminal and so on) to allocate to each user terminal on a TTI basis. Note that the definition of the TTI is not limited thereto.

The TTI may be the transmission time unit of channel-encoded data packets (transport blocks), code blocks, codewords and so on, or may be the unit of processing in scheduling, link adaptation and so on. Note that, when the TTI is given, the period of time (for example, the number of symbols) in which transport blocks, code blocks, codewords and so on are actually mapped may be shorter than the TTI.

Note that, when one slot or one minislot is referred to as a "TTI," one or more TTIs (that is, one or more slots or one or more minislots) may be the minimum time unit of scheduling. Moreover, the number of slots (the number of minislots) which constitute the minimum unit of time of the scheduling may be controlled.

A TTI having a time duration of 1 ms may also be referred to as a "common TTI (TTI in LTE Rel.8 to 12)," a "normal TTI", a "long TTI," a "common subframe," a "normal subframe," a "long subframe" and so on. A TTI that is shorter than a common TTI may also be referred to as a "shortened TTI," a "short TTI," a "partial TTI (or a "fractional TTI"), a "shortened subframe," a "short subframe," a "minislot," "a sub-slot" and so on.

Note that a long TTI (for example, a common TTI, a subframe, etc.) may be replaced by a TTI having a time duration exceeding 1 ms, and a short TTI (for example, a shortened TTI) may be replaced by a TTI having a TTI duration less than the TTI duration of a long TTI and not less than 1 ms.

A resource block (RB) is the unit of resource allocation in the time domain and the frequency domain, and may include one or more consecutive subcarriers in the frequency domain. Also, an RB may include one or more symbols in the time domain, and may be one slot, one minislot, one subframe, or one TTI in length. One TTI and one subframe may be each composed of one or more resource blocks. Note that one or more RBs may also be referred to as a "physical resource block (PRB (Physical RB))," a "subcarrier group (SCG)," a "resource element group (REG)," a "PRB pair," an "RB pair" and so on.

Furthermore, the resource block may be composed of one or more resource elements (REs). For example, one RE may be a radio resource region of one subcarrier and one symbol.

Note that the structures of radio frames, subframes, slots, minislots, symbols and so on described above are merely examples. For example, configurations pertaining to the number of subframes included in a radio frame, the number of slots per subframe or radio frame, the number of minislots included in a slot, the number of symbols and RBs included in a slot or a minislot, the number of subcarriers included in an RB, the number of symbols in a TTI, the symbol duration, the length of cyclic prefixes (CPs), and so on can be variously changed.

Also, the information, parameters, and the like described in the present disclosure may be represented in absolute values or in relative values with respect to given values, or may be represented using other applicable information. For example, a radio resource may be specified by a given index.

The names used for parameters and so on in the present disclosure are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in the present disclosure may be represented by using a variety of different technologies. For example, data, instructions, commands, information, signals, bits, symbols, chips and so on that may be referenced throughout the above description, may be represented by voltages, currents, electromagnetic waves, magnetic fields or particles, optical fields or photons, or any combination of these.

Further, information, signals and so on can be output in at least one of a direction from higher layers to lower layers and a direction from lower layers to higher layers. Information, signals, and so on may be input and/or output via a plurality of network nodes.

The information, signals and so on that are input and/or output may be stored in a specific location (for example, in a memory), or may be managed in a management table. The information, signals and so on to be input and/or output can be overwritten, updated or appended. The information, signals and so on that are output may be deleted. The information, signals and so on that are input may be transmitted to other apparatuses.

The reporting of information is by no means limited to the aspects/embodiments described in the present disclosure, and may be performed using other methods. For example, the reporting of information may be implemented by physical layer signaling (for example, downlink control information (DCI), uplink control information (UCI)), higher layer signaling (for example, RRC (Radio Resource Control) signaling, broadcast information (master information block (MIB), system information block (SIB), etc.), MAC (Medium Access Control) signaling), other signals or combinations of these.

Note that physical layer signaling may also be referred to as "L1/L2 (Layer 1/Layer 2) control information (L1/L2 control signals)," "L1 control information (L1 control signal)" and so on. Also, RRC signaling may also be referred to as "RRC messages," and can be, for example, an RRC connection setup (RRCConnectionSetup) message, RRC connection reconfiguration (RRCConnectionReconfiguration) message, and so on. Moreover, the MAC signaling may be reported using, for example, MAC control elements (MAC CEs) .

Further, reporting of given information (for example, reporting of information to the effect that "X holds") does not necessarily have to be sent explicitly, and may be sent implicitly (for example, by not reporting this given information, or by reporting another piece of information).

Decisions may be made in values represented by one bit (0 or 1), may be made in Boolean values that represent true or false, or may be made by comparing numerical values (for example, comparison with a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" as used in the present disclosure may be used interchangeably.

In the present disclosure, the terms "base station (BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," "bandwidth part (BWP)" and so on may be used interchangeably. The base station may also be referred to by terms such as "macro cell," "small cell," "femto cell," "pico cell" and so on.

The base station can accommodate one or more (for example, three) cells (also referred to as sectors). When the base station accommodates a plurality of cells, the entire coverage area of the base station can be partitioned into a plurality of smaller areas, and each smaller area can provide communication services through base station subsystems (for example, indoor small base stations (RRHs (Remote Radio Heads))). The term "cell" or "sector" refers to part or all of the coverage area of at least one of a base station and a base station subsystem that provides communication services within this coverage.

In the present disclosure, the terms "mobile station (MS)" "user terminal," "user equipment (UE)," "terminal," and so on may be used interchangeably.

A mobile station may be referred to as "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other suitable terms.

At least one of the base station and the mobile station may also be referred to as a "transmitting apparatus," a "receiving apparatus" and so on. Note that at least one of the base station and the mobile station may be a device mounted on a moving body, a moving body itself and so on. The moving body may be a transportation (for example, a car, an airplane, etc.), an unmanned moving body (for example, a drone, an autonomous car and so on), or a (manned or unmanned) robot. Note that at least one of the base station and the mobile station also includes a device that does not necessarily move during a communication operation.

Furthermore, the radio base stations in the present disclosure may be replaced by user terminals. For example, each aspect/embodiment of the present disclosure may be applied to a configuration in which communication between a radio base station and a user terminal is replaced by communication among a plurality of user terminals (which may also be referred to as, for example, "D2D (Device-to-Device)," "V2X (Vehicle-to-Everything)," etc.). In this case, the user terminals 20 may have the functions of the radio base stations 10 described above. In addition, terms such as "uplink" and "downlink" may be interpreted as a term corresponding to communication between terminals (for example, "side"). For example, an uplink channel may be replaced by a side channel.

Likewise, the user terminals in the present disclosure may be replaced by radio base stations. In this case, the radio base stations 10 may have the functions of the user terminals 20 described above.

Certain actions that have been described in the present disclosure to be performed by base stations may, in some cases, be performed by their upper nodes. In a network composed of one or more network nodes with base stations, it is clear that various operations that are performed so as to communicate with terminals can be performed by base stations, one or more network nodes (for example, MMEs (Mobility Management Entities), S-GWs (Serving-Gateways), etc. may be possible, but these are not limiting) other than base stations, or combinations of these.

The respective aspects/embodiments illustrated in the present disclosure may be used individually or in combinations, which may be switched depending on the aspect of implementation. The order of processes, sequences, flowcharts and so on that have been used to describe the respective aspects/embodiments in the present disclosure may be re-ordered as long as inconsistencies do not arise. For example, regarding the methods described in the present disclosure, elements of various steps are presented in an illustrative order, and the methods are not limited to the presented particular order.

The respective aspects/embodiments described in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and/or next-generation systems that are enhanced based on these. Further, a plurality of systems may be combined and applied (for example, a combination of LTE or LTE-A and 5G, etc.).

The phrase "based on" as used in the present disclosure does not mean "based only on," unless otherwise specified. In other words, the phrase "based on" means both "based only on" and "based at least on."

Reference to elements with designations such as "first," "second" and so on as used in the present disclosure does not generally limit the number/quantity or order of these elements. These designations may be used in the present disclosure only for convenience, as a method for distinguishing between two or more elements. Hence, references of first and second elements do not mean that only two elements may be adoptable, or that the first element must precede the second element in some way.

The terms "judge" and "determine" as used in the present disclosure may encompass a wide variety of actions. For example, to "judge (determine)" as used herein may be interpreted to mean making judgements (determinations) related to judging, calculating, computing, processing, deriving, investigating, looking up (for example, searching a table, a database or some other data structure), ascertaining and so on.

Furthermore, to "judge (determine)" as used herein may be interpreted to mean making judgements (determinations) related to receiving (for example, receiving information), transmitting (for example, transmitting information), inputting, outputting, accessing (for example, accessing data in a memory) and so on.

In addition, to "judge (determine)" as used herein may be interpreted to mean making judgements and determinations related to resolving, selecting, choosing, establishing, comparing, and so on. In other words, to "judge (determine)" as used herein may be interpreted to mean making judgements and determinations related to some action.

In addition, to "judge (determine)" as used herein may be replaced by "assuming," "expecting," "considering" and so on.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced by "access."

In the present disclosure, when two elements are connected, these elements may be considered "connected" or "coupled" to each other by using one or more electrical wires, cables, printed electrical connections and so on, and, as a number of non-limiting and non-inclusive examples, by using electromagnetic energy, such as electromagnetic energy having wavelengths in the radio frequency, microwave and optical (both visible and invisible) regions.

In the present disclosure, the phrase "A and B are different" may mean "A and B are different from each other." The terms such as "leave" "coupled" and so on may be interpreted as well.

When the terms such as "include," "including," and variations of these are used in the present disclosure or claims, these terms are intended to be inclusive, in a manner similar to the way the term "comprising" is used. Furthermore, the term "or" as used in the present disclosure or in claims is intended to be not an exclusive disjunction.

For example, when articles, such as "a," "an," and "the" in English, are added by translation in the present disclosure, the present disclosure may include that nouns which follows these articles are in plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a control section that determines the number of at least one of first reference signals for beam failure detection and second reference signals for new candidate beam identification that are simultaneously monitorable cross a plurality of cells based on a specific capability of the user terminal; and
a receiving section that simultaneously monitors at least one of the first reference signals and the second reference signals in one or more cells based on the number of at least one of the first reference signals and the second reference signals that are simultaneously monitorable cross the plurality of cells.

2. The user terminal according to claim 1, wherein the control section assumes, as the specific capability, a capability that is obtained by replacing a capability for beam failure recovery assuming a case where the number of secondary cells to be configured is one as a capability assuming a case where the number of secondary cells to be configured exceeds one.

3. The user terminal according to claim 1 or 2, wherein the control section determines the number of at least one of the first reference signals and the second reference signals that are simultaneously monitorable cross the plurality of cells regardless of the number of cells to be configured.

4. The user terminal according to any one of claims 1 to 3, wherein the control section determines the number of secondary cells that support beam failure recovery based on the specific capability.

5. The user terminal according to any one of claims 1 to 4, wherein the control section assumes that the specific capability is a capability that considers only activated secondary cells.

6. A radio communication method for a user terminal comprising:
a step of determining the number of at least one of first reference signals for beam failure detection and second reference signals for new candidate beam identification that are simultaneously monitorable cross a plurality of cells based on a specific capability of the user terminal; and
a step of simultaneously monitoring at least one of the first reference signals and the second reference signals in one or more cells based on the number of at least one of the first reference signals and the second reference signals that are simultaneously monitorable cross the plurality of cells.
